# EUROPEAN PATENT SPECIFICATION

(11) **EP 2 246 765 B1**
(45) Date of publication and mention of the grant of the patent: **21.11.2012**
(21) Application number: 09712594.2
(22) Date of filing: 28.01.2009
(51) Int. Cl.: G01S 13/93, G05D 1/02, G08G 3/02, B63H 21/22, B63H 25/04, B63H 25/18, B63H 25/42, G01S 13/86

(54) **EVASIVE AUTOPILOT SYSTEM FOR VESSELS**
AUSWEICHENDES AUTOPILOTENSYSTEM FÜR SCHIFFE
SYSTÈME DE PILOTE AUTOMATIQUE D'ÉVITEMENT POUR EMBARCATIONS

(30) Priority: 19.02.2008 ES 200800447; 17.10.2008 ES 200802936
(43) Date of publication of application: 03.11.2010
(73) Proprietor: Bendito Vallori, Juan Mariano, 07400 Alcudia, Baleares (ES)
(72) Inventor: Bendito Vallori, Juan Mariano, 07400 Alcudia, Baleares (ES)
(74) Representative: Pons Ariño, Angel
(86) International application number: PCT/ES2009/070013
(87) International publication number: WO 2009/103837

(56) References cited:
- WO-A-2004/053814
- US-A1- 2004 006 423
- ITO M ET AL: "Collision avoidance control of ship with genetic algorithm" CONTROL APPLICATIONS, 1999. PROCEEDINGS OF THE 1999 IEEE INTERNATIONAL CONFERENCE ON KOHALA COAST, HI, USA 22-27 AUG. 1999, PISCATAWAY, NJ, USA,IEEE, US, vol. 2, 22 August 1999 (1999-08-22), pages 1791-1796, XP010356250 ISBN: 978-0-7803-5446-3
- HWANG C N, YANG J M, CHIANG C Y: "The design of fuzzy collision-avoidance expert system implemented by H[Infinity]-autopilot" JOURNAL OF MARINE SCIENCE AND TECHNOLOGY, [Online] vol. 9, no. 1, 2001, pages 25-37, XP002529071 Retrieved from the Internet: URL:http://www.jmst.org.tw/marine/9-1/25-3 7.pdf> [retrieved on 2009-05-15]

## Description

### OBJECT OF THE INVENTION

The present invention relates to the field of marine navigation.

The object of the invention is an autopilot system for vessels, which permits the evasion of various types of obstacles.

### BACKGROUND OF THE INVENTION

Currently autopilot devices are known that are capable of maintaining the course by actuating on, at least, the course controls of the vessel.

These autopilots adopt different formats, and are even adaptable to vessels not configured for them, by means of a pulley wheel that acts on the steering wheel.

They are frequently connected to geographic positioning devices (GPS) in order to correct deviations in the desired course.

Nevertheless, automatic systems are not known that are capable of identifying and correcting collision courses, with collision courses meaning those where the course and velocity of the vessel dangerously decrease the distance with respect to any obstacle; as current autopilots are limited to staying on the course programmed, and at most, to correcting it if it detects deviations with respect to the destination point, so even in these times collisions and overtakings continue to occur between vessels, with the consequent economic losses, and even losses of lives, and harmful effects for the environment.

< Examples of known evasive autopilot systems are found in Ito, "Collision Avoidance Control of Ship with Genetic Algorithm", in Hwang, "The design of Fuzzy collision-avoidance expert system implemented by H∞-autopilot", and in US 2004/0006423 A1. >

### DESCRIPTION OF THE INVENTION

The evasive autopilot system for bearing vessels according to the invention has an optimal make-up which resolves the drawbacks described.

In accordance with the invention, the system comprises an autopilot device which actuates, at least, on the course controls of a vessel bearing the system of the invention; an electronic evasion module capable of identifying collision courses and generating evasive manoeuvre orders for the autopilot device in this case; a radar connected to said electronic evasion module to inform it of the existence of obstacles which create collision courses;
< and an activation connection of a sound signal emitting system to wam other vessels of the evasive manoeuvres. >

When it detects a collision course with a static object or in motion object, the electronic evasion module generates control orders for the autopilot device, which will modify, at least, the course of the bearing vessel to avoid the collision, subsequently re-establishing, calculating according to the safety parameters introduced if it has open course of ships and obstacles which could produce collisions or even grounding.

Additionally, the system of the invention comprises that the autopilot device implements an actuator on the course control and/or speed of the bearing vessel, in order to generate orders on these controls in the event of evasive manoeuvre. This permits the system to not only change the course, but also the speed and even, if necessary, reverse the direction without stopping the driving/propulsion systems, according to the parameters of safety introduced, in order to reduce the collision speed and/or prevent the collision.

The invention can additionally incorporate an automatic identification system (AIS), as well as a laser telemeter, and complementary systems to the radar. Both the AIS system and the laser telemeter are connected to the electronic evasion module, which in turn is connected to the radar.

The AIS system permits a bearing vessel to communicate its position to other vessels, as well as other pertinent information, such as identifying information, so that other vessels learn about the proximity of an obstacle and know that they are dealing with a navigation vehicle and can identify it.

A laser telemeter is a device which permits one to find out the distance between the bearing vessel and an obstacle, by means of a laser beam.

The system of the invention can additionally incorporate means of detecting the turning radius of the steering wheel and means of measuring the revolutions of the engine, connected to the electronic evasion module to transmit the course of the bearing vessel and the rotational speed of the motor.

When it is time to gather information and execute the orders created, the system of the invention considers implementing the different elements which are exclusively intended to make it up for, or considers the possibility of using some of those which may exist in the bearing vessel previously (for example existing radar, or the foghorn, etc).

### DESCRIPTION OF THE DRAWINGS

In order to complement the description being carried out and with the purpose of helping towards a better understanding of the characteristics of the invention, in accordance with a preferred example of practical embodiment thereof, a set of drawings is attached as an integral part of said description, wherein the following, in an illustrative and non-limitative character, has been represented:

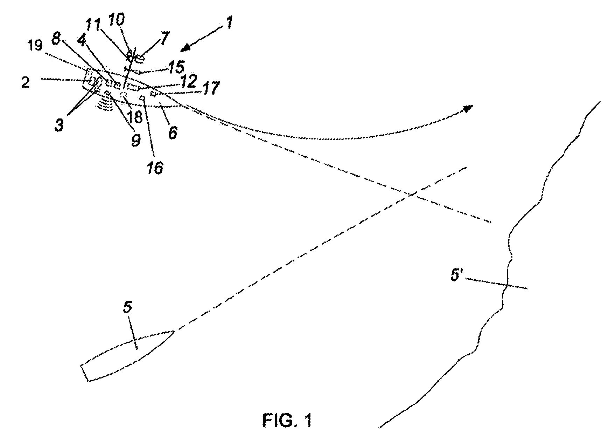

Figure 1 shows a schematic view of a vessel bearing the system of the invention, whose course presents risks of collision with another vessel or with the coast.

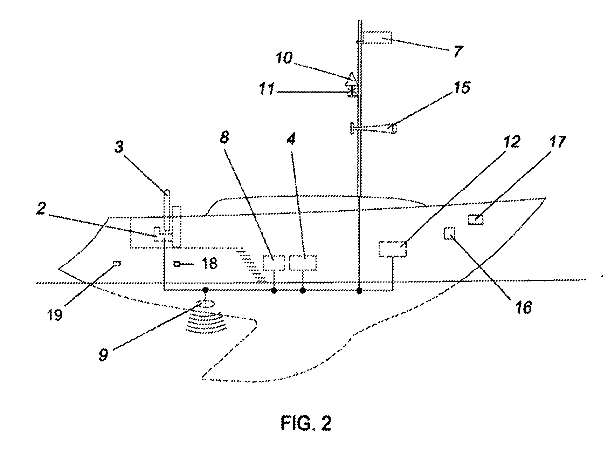

Figure 2 shows a schematic view of bearing vessel equipped with the system of the invention.

### PREFERRED EMBODIMENT OF THE INVENTION

The evasive autopilot system (1) for vessels (6) bearing the invention comprises an autopilot device (2) which actuates, in this example of the invention, on the course controls (3) and speed of the bearing vessel (6).

This autopilot device (2) is connected to an electronic evasion module (4), which implements the electronics and the programming necessary to identify that it is on a collision course, and generates evasive manoeuvre orders for the autopilot device (2) in this case. The detection of obstacles, both mobile (5), as well as geographic (5') or submerged (not represented) can be static and dynamic, i.e., it can be capable of detecting collision courses with static objects, or objects in motion depending on the course and speed thereof.

To do this, the electronic evasion module (4) knows and previously determines the course parameters and speed of the vessel and locates mobile (5), geographic (5') and/or submerged obstacles which could get in the way of said course depending on the speed of the vessel itself and the speed thereof, calculating whether there is risk of collision. It can be programmed, depending on the characteristics of the bearing vessel (6) the time delay and the minimum distance to initiate the evasive manoeuvre. Both the acquisition of information and the calculation of the different situations are carried out sequentially and repetitively several times per second.

The programming of the electronic evasion module (4) also implements an decision making algorithm according to the international navigation regulations relating to passage rights, evasive course determination and warning signal generation of decided manoeuvres, so that it is capable of waiting for the manoeuvre of another vessel or moving obstacle (5) if it has rite of passage, before generating the instructions for the evasive manoeuvre, which in any case will be generated and executed if the other vessel continues on the collision course.

The detection of moving (5), (geographic (5') and/or submerged obstacles is done automatically, mainly by means of a radar (7) associated with the electronic evasion module (4). It is proposed that the radar (7) can be complemented with the help of a laser telemeter (16) to detect the distance to which the obstacle (5, 5') is located and, in the case of the AIS systems (17), to send and receive signals from other vessels and be able to identify them.

The course of the vessel itself, either of the autopilot device (2) if this is prepared for it, or of the geographic positioning system (8) associated to the electronic evasion module (4), such as a GPS. Said geographic positioning system (8) can additionally incorporate cartography, which will permit the electronic evasion module (4), not only to establish the position of the bearing vessel (6) and its course, but also to determine the existence of geographic obstacles (5') (cliffs, reefs, etc), in order to take them into account when generating an evasive manoeuvre, or simply to determine if there is a risk of collision therewith in the normal manoeuvre, generating evasive manoeuvre orders in this case.

The system (1) can also comprise a sonar (9) associated with the electronic evasion module (4), which will inform it of the existence of sea bottoms or submerged obstacles which might be dangerous during the evasive manoeuvres or normal manoeuvres, so that the electronic evasion module (4) can generate the precise orders so that the autopilot device (2) corrects the course and/or speed in order to avoid them or rule out the evasive manoeuvres which could be compromised by this cause.

In the same fashion, the system (1) of the invention can comprise a weather vane (10) and an anemometer 811) associated to the electronic evasion module (4), in order to know the direction and speed of the wind and take these parameters into account when generating an evasive manoeuvre, for example to give more force to the steering wheel to compensate for drifting due to wind in the deadworks of the bearing vessel (1).

The system (1) of the invention can also comprise a plotter (12) associated with the electronic evasion module (4), to draw up the original courses and/or the evasive manoeuvre courses.

It can also comprise an invasive actuation indicator, not represented, which can be, for example, a sound emitter and/or a light indicator, which notifies of the beginning and the end of each said manoeuvre, and can also comprise an exterior connection to activate the foghorn (15) of the bearing vessel, with the purpose of notifying of said manoeuvres to other vessels according to the international regulations.

Once the risk of collision has been detected, the electronic evasion module (4) determines the parameters of the course that must be used to avoid the collision. To calculate said course parameters, the electronic evasion module (4) can additionally consider the information received from measurement sensors (19) of the engine revolutions (tachometer) and means of detecting (18) the degrees turned by the steering wheel, as well as the speed of the bearing vessel (6).

In any case, the definitive control of the bearing vessel (6) by the crew is ensured by means of the availability of an emergency stop control, as well as an activation and deactivation control, not represented. In both cases, these can be remote controls so that control is maintained at all times, including in the case of long bearing vessels (6).

With regard to the peripheral elements of the system (1): radar (7), geographic positioning system (8), plotter (12), sonar (9), anemometer (11) and weather vane (10), they can be exclusively dedicated to the system (1) of the invention, or can be elements shared with other systems on the ship, so that the invention can also consider the use for the system (1) of the invention, of the equipment of this type previously existing on the bearing vessel (6).

In the same manner, if one wishes to use an existing autopilot device (2), which only actuates on the control of the course of the bearing vessel (6), the system of the invention is also provided with the implementation of an actuator, not represented, on the gear and speed controls, actuator which will be conveniently associated to the electronic evasion module (4). Then the existing autopilot device (2) will take charge of the course control, and this actuator will take charge of the gear and speed control.

## Claims

1. Evasive autopilot system (1) for bearing vessels (6), which comprises:
- an autopilot device (2) which actuates, at least, on the course controls (3) of the bearing vessel (6);
- an electronic evasion module (4) capable of generating evasive manoeuvre orders for the autopilot device (2) in the event of taking a collision course; and
- a radar (7) connected to said electronic evasion module (4) in order to detect the existence of mobile (5), geographic (5') and/or submerged obstacles which generate collision courses **characterized in that** it additionally comprises an activation connection of a sound signal emitting system (15) of the bearing vessel (6) to warn other vessels of the evasive manoeuvres.

2. Evasive autopilot system (1) for bearing vessels (6), according to claim 1, **characterized in that** the autopilot device (2) is configured so that it is capable of transmitting the ship's own course to the electronic evasion module (4).

3. Evasive autopilot system (1) for bearing vessels (6) according to claim 1, **characterized in that** it additionally comprises a geographic positioning system (8) associated to the electronic evasion module (4) in order to provide said electronic evasion module (4) with the position and course of the bearing vessel (6).

4. Evasive autopilot system (1) for bearing vessels (6) according to claim 3, **characterized in that** the geographic positioning system (8) implements cartographies, in order to inform the electronic evasion module (4) of the existence of geographic obstacles (5').

5. Evasive autopilot system (1) for bearing vessels (6) according to any of the previous claims, **characterized in that** it incorporates an actuator on the gear and speed controls of the bearing vessel (6).

6. Evasive autopilot system (1) for bearing vessels (6) according to any of the previous claims, **characterized in that** it additionally comprises a sonar (9) associated to the electronic evasion module (4), in order to inform said electronic evasion module (4) of the existence of submerged obstacles.

7. Evasive autopilot system (1) for bearing vessels (6) according to any of the previous claims, **characterized in that** it additionally comprises a weather vane (10) and an anemometer (11) associated to the electronic evasion module (4), adapted to inform said electronic evasion module (4) of the speed and force of the wind.

8. Evasive autopilot system (1) for bearing vessels (6) according to any of the previous claims, **characterized in that** it additionally comprises a plotter (12) associated to the electronic evasion module (4), in order to draw up the original courses and/or the evasive manoeuvre courses.

9. Evasive autopilot system (1) for bearing vessels (6) according to any of the previous claims, **characterized in that** it additionally comprises an evasive actuation indicator, which informs of the beginning and end of an evasive manoeuvre.

10. Evasive autopilot system (1) for bearing vessels (6) according to claim 9, **characterized in that** the evasive actuation indicator is selected from between:
- a sound emitter, and
- a light indicator.

11. Evasive autopilot system (1) for bearing vessels (6) according to any of the previous claims, **characterized in that** it incorporates a control for its activation and deactivation.

12. Evasive autopilot system (1) for bearing vessels (6) according to any of the previous claims, **characterized in that** it incorporates an emergency stop control for the bearing vessel (6).

13. Evasive autopilot system (1) for bearing vessels (6) according to any of the previous claims, **characterized in that** the electronic evasive module (4) implements a decision making algorithm according to the international navigation regulations relating to rites of passage, determination of evasion courses and generation of warning signals of decided manoeuvres, which is capable of waiting for the manoeuvre of another vessel or moving obstacle (5) if it has rite of passage, before generating the evasive manoeuvre instructions, generating said evasive manoeuvre in any case and executing it if the other vessel continues along the collision course.

14. Evasive autopilot system (1) for bearing vessels (6) according to any of the previous claims, **characterized in that** it additionally comprises:
- A laser telemeter (16) which supports the radar (7),
- an AIS system /17) which supports the radar (7), and
- means of detecting (18) the engine revolutions of the bearing vessel (6), and
- measurement sensors (19) of the turning degrees of the steering wheel of the bearing vessel (6).

## Patentansprüche

1. Ausweichendes Autopilotsystem (1) für tragende Schiffe (6), das Folgendes umfasst:
- Eine Autopilotvorrichtung (2), die mindestens auf die Kurssteuerungen (3) des tragenden Schiffs (6) einwirkt;
- Ein elektronisches Ausweichmodul (4), das dazu fähig ist, Ausweichmanöverbefehle für die Autopilotvorrichtung (2) im Falle eines Kollisionskurses zu erzeugen; und
- Ein Radargerät (7), das mit dem besagten elektronischen Ausweichmodul (4) verbunden ist, um die Existenz von beweglichen (5), geografischen (5') und/oder Hindernissen unter Wasser zu erkennen, die Kollisionskurse erzeugen,
**dadurch gekennzeichnet, dass** dieses zusätzlich eine Aktivierungsverbindung eines ein Tonsignal aussendenden Systems (15) des tragenden Schiffs (6) umfasst, um andere Schiffe bezüglich der Ausweichmanöver zu warnen.

2. Ausweichendes Autopilotsystem (1) für tragende Schiffe (6) nach Anspruch 1, **dadurch gekennzeichnet, dass** die Autopilotvorrichtung (2) so ausgelegt ist, dass diese den eigenen Kurs des Schiffs an das elektronische Ausweichmodul (4) übertragen kann.

3. Ausweichendes Autopilotsystem (1) für tragende Schiffe (6) nach Anspruch 1, **dadurch gekennzeichnet, dass** dieses zusätzlich ein geografisches Positioniersystem (8) umfasst, das mit dem elektronischen Ausweichmodul (4) verknüpft ist, um dem besagten elektronischen Ausweichmodul (4) die Position und den Kurs des tragenden Schiffs (6) bereitzustellen.

4. Ausweichendes Autopilotsystem (1) für tragende Schiffe (6) nach Anspruch 3, **dadurch gekennzeichnet, dass** das geografische Positioniersystem (8) Kartografien implementiert, um das elektronische Ausweichmodul (4) über die Existenz von geografischen Hindernissen (5') zu informieren.

5. Ausweichendes Autopilotsystem (1) für tragende Schiffe (6) nach irgendeinem der vorherigen Ansprüche, **dadurch gekennzeichnet, dass** dieses einen Auslöser auf den Getriebe- und Drehzahlsteuerungen des tragenden Schiffs (6) einschließt.

6. Ausweichendes Autopilotsystem (1) für tragende Schiffe (6) nach irgendeinem der vorherigen Ansprüche, **dadurch gekennzeichnet, dass** dieses zusätzlich ein mit dem elektronischen Ausweichmodul (4) verknüpftes Sonargerät (9) umfasst, um das besagte elektronische Ausweichmodul (4) über die Existenz von Hindernissen unter Wasser zu informieren.

7. Ausweichendes Autopilotsystem (1) für tragende Schiffe (6) nach irgendeinem der vorherigen Ansprüche, **dadurch gekennzeichnet, dass** dieses zusätzlich eine Wetterfahne (10) und ein Anemometer (11) umfasst, die mit dem elektronischen Ausweichmodul (4) verknüpfte und dazu ausgelegt sind, das besagte elektronische Ausweichmodul (4) über die Windgeschwindigkeit und Windstärke zu informieren.

8. Ausweichendes Autopilotsystem (1) für tragende Schiffe (6) nach irgendeinem der vorherigen Ansprüche, **dadurch gekennzeichnet, dass** dieses zusätzlich ein mit dem elektronischen Ausweichmodul (4) verknüpftes Kartiergerät (12) umfasst, um den ursprünglichen und/oder den ausweichenden Manöverkurs aufzuzeichnen.

9. Ausweichendes Autopilotsystem (1) für tragende Schiffe (6) nach irgendeinem der vorherigen Ansprüche, **dadurch gekennzeichnet, dass** dieses zusätzlich einen Ausweichaktivierungsanzeiger umfasst, der über den Start und das Ende eines Ausweichmanövers informiert.

10. Ausweichendes Autopilotsystem (1) für tragende Schiffe (6) nach Anspruch 9, **dadurch gekennzeichnet, dass** der Ausweichaktivierungsanzeiger aus Folgenden ausgewählt wurde:
- einem Tonsender und
- einer Leuchtanzeige.

11. Ausweichendes Autopilotsystem (1) für tragende Schiffe (6) nach irgendeinem der vorherigen Ansprüche, **dadurch gekennzeichnet, dass** dieses eine Steuerung für deren Aktivierung und Deaktivierung einschließt.

12. Ausweichendes Autopilotsystem (1) für tragende Schiffe (6) nach irgendeinem der vorherigen Ansprüche, **dadurch gekennzeichnet, dass** dieses einen Notausschalter für das tragende Schiff (6) einschließt.

13. Ausweichendes Autopilotsystem (1) für tragende Schiffe (6) nach irgendeinem der vorherigen Ansprüche, **dadurch gekennzeichnet, dass** das elektronische Ausweichmodul (4) einen entscheidungsfällenden Algorithmus gemäß den internationalen Schifffahrtsbestimmungen bezüglich der Vorfahrtsregeln, der Bestimmung von Ausweichkursen und der Erzeugung von Warnsignalen über beschlossene Manöver implementiert, der dazu fähig ist, auf das Manöver eines anderen Schiffs oder beweglichen Hindernisses (5) zu warten, falls dieses das Recht der Vorfahrt besitzt, bevor die Ausweichmanöverbefehle erzeugt werden, wobei das besagte Ausweichmanöver in jedem Fall erzeugt und durchgeführt wird, falls das andere Schiff weiterhin auf dem Kollisionskurs verbleibt.

14. Ausweichendes Autopilotsystem (1) für tragende Schiffe (6) nach irgendeinem der vorherigen Ansprüche, **dadurch gekennzeichnet, dass** dieses zusätzlich Folgendes umfasst:
- Einen Laser-Entfernungsmesser (16), der das Radargerät (7) unterstützt;
- Ein AIS-System (17), welches das Radargerät (7) unterstützt; und
- Mittel zur Erkennung (18) der Motordrehzahl des tragenden Schiffs (6); und
- Messsensoren (19) des Drehwinkels des Steuerrads des tragenden Schiffs (6).

## Revendications

1. Système de pilotage automatique d'évitement (1) pour navires porteurs (6), qui comprend :
- un dispositif de pilotage automatique (2) qui agit, au moins, sur les commandes de cap (3) du navire porteur (6) ;
- un module électronique d'évitement (4) capable de générer des ordres de manoeuvre d'évitement pour le dispositif de pilotage automatique (2) dans le cas où il prendrait un cap de collision ; et
- un radar (7) connecté audit module électronique d'évitement (4) pour détecter l'existence d'obstacles mobiles (5), géographiques (5') et/ou submergés qui génèrent des caps de collision,
**caractérisé en ce qu'**il comprend en outre une connexion d'activation d'un système émetteur de signal sonore (15) du navire porteur (6) pour avertir d'autres navires des manoeuvres d'évitement.

2. Système de pilotage automatique d'évitement (1) pour navires porteurs (6), selon la revendication 1, **caractérisé en ce que** le dispositif de pilotage automatique (2) est configuré de façon à être capable de transmettre le propre cap du bateau au module électronique d'évitement (4).

3. Système de pilotage automatique d'évitement (1) pour navires porteurs (6), selon la revendication 1, **caractérisé en ce qu'**il comprend en outre un système de positionnement géographique (8) associé au module électronique d'évitement (4) afin de fournir audit module électronique d'évitement (4) la position et le cap du navire porteur (6).

4. Système de pilotage automatique d'évitement (1) pour navires porteurs (6), selon la revendication 3, **caractérisé en ce que** le système de positionnement géographique (8) utilise des cartes, afin d'informer le module électronique d'évitement (4) de l'existence d'obstacles géographiques (5').

5. Système de pilotage automatique d'évitement (1) pour navires porteurs (6), selon n'importe laquelle des revendications précédentes, **caractérisé en ce qu'**il comprend un déclencheur sur les commandes d'appareil à gouverner et de vitesse du navire porteur (6).

6. Système de pilotage automatique d'évitement (1) pour navires porteurs (6), selon n'importe laquelle des revendications précédentes, **caractérisé en ce qu'**il comprend en outre un sonar (9) associé au module électronique d'évitement (4), afin d'informer ledit module électronique d'évitement (4) de l'existence d'obstacles submergés.

7. Système de pilotage automatique d'évitement (1) pour navires porteurs (6), selon n'importe laquelle des revendications précédentes, **caractérisé en ce qu'**il comprend en outre une girouette (10) et un anémomètre (11) associés au module électronique d'évitement (4), adaptés pour informer ledit module électronique d'évitement (4) de la vitesse et de la force du vent.

8. Système de pilotage automatique d'évitement (1) pour navires porteurs (6), selon n'importe laquelle des revendications précédentes, **caractérisé en ce qu'**il comprend en outre un traceur (12) associé au module électronique d'évitement (4), afin d'établir les caps d'origine et/ou les caps de manoeuvre d'évitement.

9. Système de pilotage automatique d'évitement (1) pour navires porteurs (6), selon n'importe laquelle des revendications précédentes, **caractérisé en ce qu'**il comprend en outre un indicateur de déclenchement d'évitement, qui informe du commencement et de la fin d'une manoeuvre d'évitement.

10. Système de pilotage automatique d'évitement (1) pour navires porteurs (6), selon la revendication 9, **caractérisé en ce que** l'indicateur de déclenchement d'évitement est choisi parmi :
- un émetteur sonore et
- un voyant lumineux.

11. Système de pilotage automatique d'évitement (1) pour navires porteurs (6), selon n'importe laquelle des revendications précédentes, **caractérisé en ce qu'**il comprend une commande pour son activation et sa désactivation.

12. Système de pilotage automatique d'évitement (1) pour navires porteurs (6), selon n'importe laquelle des revendications précédentes, **caractérisé en ce qu'**il comprend une commande d'arrêt d'urgence pour le navire porteur (6).

13. Système de pilotage automatique d'évitement (1) pour navires porteurs (6), selon n'importe laquelle des revendications précédentes, **caractérisé en ce que** le module électronique d'évitement (4) exécute un algorithme de prise de décision conformément aux règles de la navigation internationale relatives aux rites de passage, la détermination de caps d'évitement et la génération de signaux avertissant des manoeuvres décidées, qui est capable d'attendre la manoeuvre d'un autre navire ou obstacle mobile (5) s'il a un rite de passage, avant de générer les instructions de manoeuvre d'évitement, générant ladite manoeuvre d'évitement dans tous les cas et la mettant à exécution si l'autre navire continue le long du cap de collision.

14. Système de pilotage automatique d'évitement (1) pour navires porteurs (6), selon n'importe laquelle des revendications précédentes, **caractérisé en ce qu'**il comprend en outre :
- un télémètre laser (16) porté par le radar (7),
- un Système d'Identification Automatique (17) porté par le radar (7), et
- des moyens de détection (18) des tours de moteur du navire porteur (6), et
- des capteurs de mesure (19) des degrés de rotation de la barre à roue du navire porteur (6).
